# EUROPEAN PATENT APPLICATION

(11) **EP 4 492 561 A1**
(43) Date of publication of application: **15.01.2025**
(21) Application number: 22930924.0
(22) Date of filing: 11.03.2022
(51) Int. Cl.: H01M 50/536, H01M 50/533

(54) **BATTERY, AND METHOD FOR MANUFACTURING BATTERY**

(71) Applicant: Kabushiki Kaisha Toshiba, Tokyo 105-0023 (JP)
(72) Inventor: MORITA, Shusuke, Tokyo 105-0023 (JP)
(74) Representative: Hoffmann Eitle
(86) International application number: PCT/JP2022/010955
(87) International publication number: WO 2023/170943

(57) **Abstract**

A battery of embodiments includes a container member, an electrode terminal, an electrode group, a conductive member and a joint part. The electrode terminal is disposed in the container member. The electrode group is housed in an inner cavity of the container member, and includes a current collecting tab that protrudes. The conductive member electrically connects the electrode terminal and the current collecting tab. The joint part connects the current collecting tab and the conductive member. The joint part includes a recess and a peripheral edge portion. The recess is recessed toward a side on which the conductive member is located in the current collecting tab, and a second dimension between both ends in a second direction of the recess is less than a first dimension between both ends in a first direction of the recess, the second direction crossing the first direction. The peripheral edge portion surrounds the recess, and a residual amount of burrs is greater in a part neighboring the recess from the first direction, than in a part neighboring the recess from the second direction.

## Description

### FIELD

Embodiments of the present invention relate generally to a battery and a manufacturing method of a battery.

### BACKGROUND

As a battery such as a lithium ion secondary battery, there is known such a battery that an electrode group including a positive electrode and a negative electrode is housed in an inner cavity of a container member. In this battery, an electrode terminal is disposed in the container member. Furthermore, the electrode group includes a current collector and an active material-containing layer supported on the current collector. The current collector includes a current collecting tab as a part on which the active material-containing layer is not supported. The current collecting tab is electrically connected to the electrode terminal via a conductive material such as a lead. In addition, a plurality of belt-shaped portions are stacked in the current collecting tab.

In manufacturing such a battery, the belt-shaped portions stacked in the current collecting tab are joined to a conductive member or the like by ultrasonic welding. Specifically, the stacked belt-shaped portions of the current collecting tab and the conductive member are mutually joined by being deformed. If the belt-shaped portions and the conductive member are joined in this manner, a recess is formed in a connection part, and there may be a case where burrs are formed on a peripheral edge or the like of the recess. The burrs are protrusions occurring on the above-described peripheral edge or the like during the process of forming the recess, or a residual portion of the belt-shaped portion or the like. In the joining, it is required to reduce the formation of burrs on the peripheral edge or the like of the recess that joins the belt-shaped portion and the conductive member.

### CITATION LIST

### PATENT LITERATURE

Patent document 1: Jpn. Pat. Appln. KOKAI Publication No. 2017-074611
Patent document 2: Jpn. Pat. Appln. KOKAI Publication No. 2018-094559
Patent document 3: Jpn. Pat. Appln. KOKAI Publication No. 2007-330851
Patent document 4: Jpn. Pat. Appln. KOKAI Publication No. 2017-054704

### SUMMARY

### TECHNICAL PROBLEM

The problem to be solved by the present invention is to provide a battery and a manufacturing method of a battery, which can reduce the formation of burrs on a peripheral edge or the like of a recess that joins a belt-shaped portion and a conductive member.

### SOLUTION TO PROBLEM

According to an embodiment, a battery includes a container member, an electrode terminal, an electrode group, a conductive member and a joint part. The electrode terminal is disposed in the container member. The electrode group is housed in an inner cavity of the container member, and includes a current collecting tab that protrudes. The conductive member electrically connects the electrode terminal and the current collecting tab. The joint part connects the current collecting tab and the conductive member. The joint part includes a recess and a peripheral edge portion. The recess is recessed toward a side on which the conductive member is located in the current collecting tab, and a second dimension between both ends in a second direction of the recess is less than a first dimension between both ends in a first direction of the recess, the second direction crossing the first direction. The peripheral edge portion surrounds the recess, and a residual amount of burrs is greater in a part neighboring the recess from the first direction, than in a part neighboring the recess from the second direction.

### BRIEF DESCRIPTION OF THE DRAWINGS

FIG. 1 is a perspective view schematically illustrating an example of a battery according to an embodiment.
FIG. 2 is a perspective view schematically illustrating a configuration of an electrode group of FIG. 1.
FIG. 3 is a schematic diagram illustrating a configuration of a current collecting tab of the electrode group of FIG. 1.
FIG. 4 is a schematic diagram illustrating an example of a recess of the current collecting tab formed in the electrode group of FIG. 1.
FIG. 5 is a cross-sectional view schematically illustrating a V-V cross section in FIG. 3.
FIG. 6 is a cross-sectional view schematically illustrating a VI-VI cross section in FIG. 3.
FIG. 7 is a diagram illustrating a joining strength at a time when a recess according to the embodiment is formed.
FIG. 8 is a diagram illustrating a joining time at a time when the recess according to the embodiment is formed.
FIG. 9 is a diagram illustrating a joining energy at a time when the recess according to the embodiment is formed.
FIG. 10 is a cross-sectional view schematically illustrating a battery according to a modification of the embodiment, by a cross section perpendicular to a depth direction of the battery.
FIG. 11 is a perspective view schematically illustrating an example of a battery according to another modification of the embodiment.
FIG. 12 is a cross-sectional view schematically illustrating a joint part of the battery according to the another modification illustrated in FIG. 11, by a cross section perpendicular to a first direction.

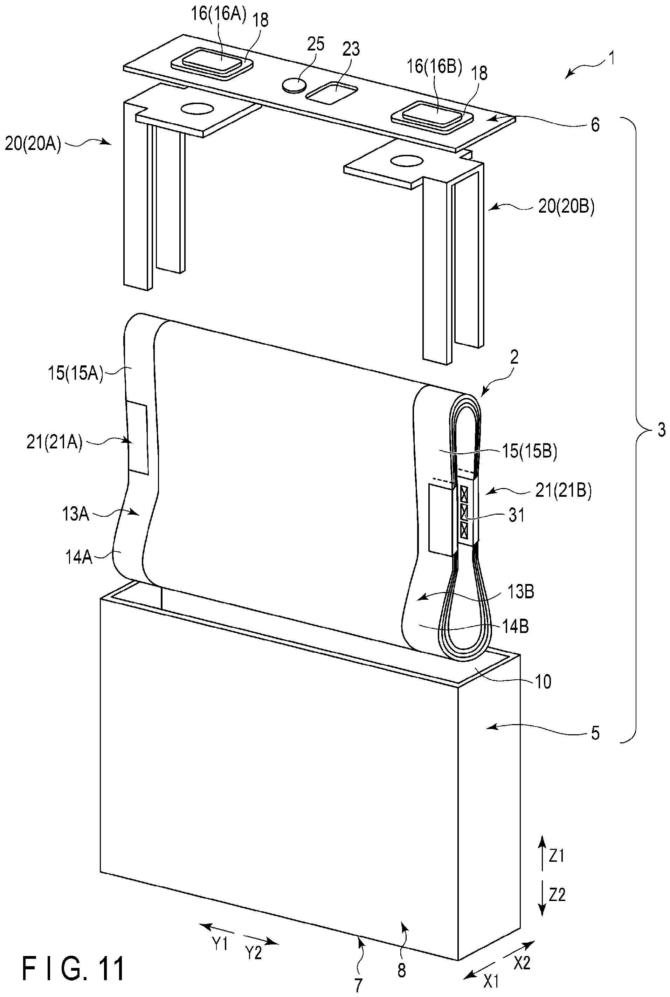

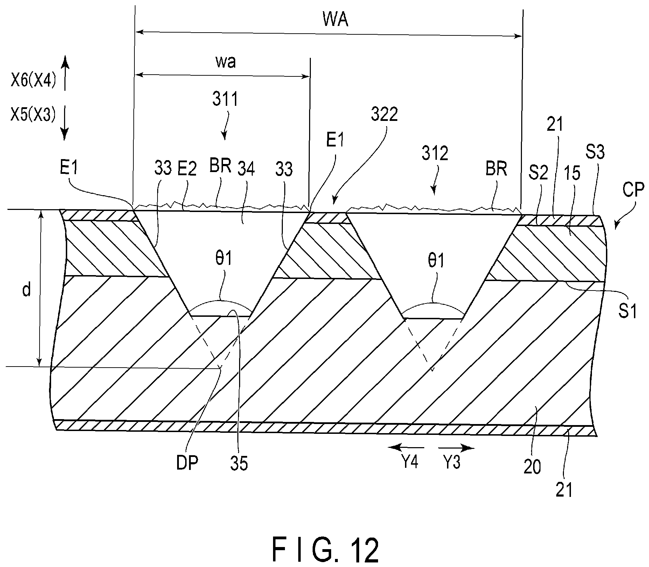

FIG. 12 is a cross-sectional view schematically illustrating the joint part of the battery according to the another modification illustrated in FIG. 11, by a cross section perpendicular to a second direction.

### DETAILED DESCRIPTION

Hereinafter, an embodiment will be described with reference to the drawings.

### (Embodiment)

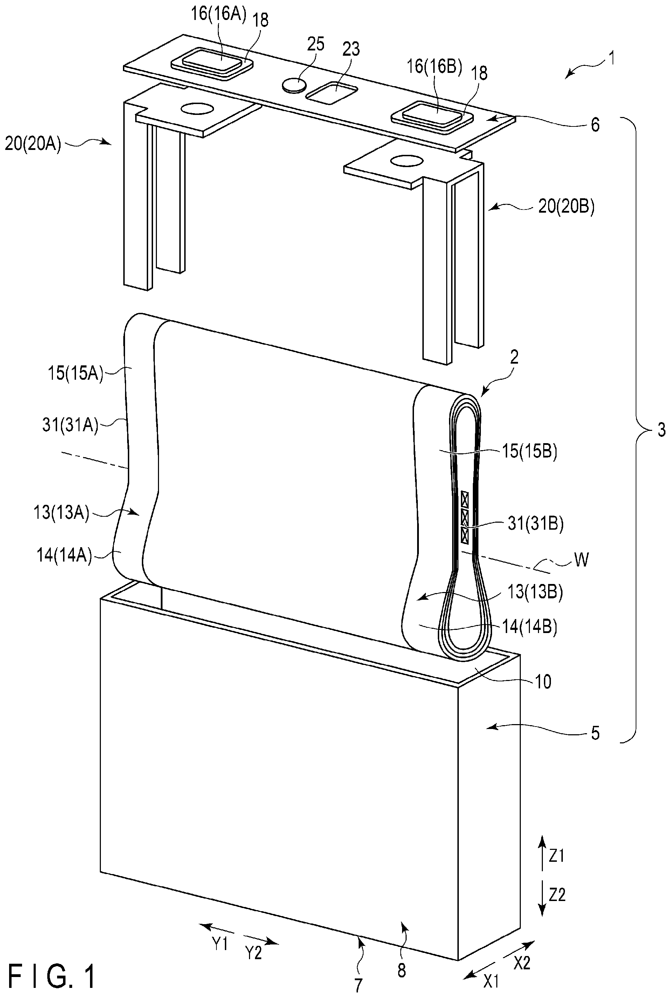

FIG. 1 illustrates a battery 1 according to an embodiment. As illustrated in FIG. 1, the battery 1 includes an electrode group 2 and a container member 3. The container member 3 includes an outer container 5 and a lid 6. Each of the outer container 5 and the lid 6 is made of a metal such as aluminum, an aluminum alloy, iron, copper, or stainless steel. Here, in the battery 1 (outer container 5), a depth direction (indicated by arrow X1 and arrow X2), a lateral direction (indicated by arrow Y1 and arrow Y2) crossing (perpendicular or substantially perpendicular to) the depth direction, and a height direction (indicated by arrow Z1 and arrow Z2) crossing (perpendicular or substantially perpendicular to) both the depth direction and the lateral direction, are defined. In each of the battery 1 and the outer container 5, a dimension in the depth direction is less than a dimension in the lateral direction and a dimension in the height direction. Note that FIG. 1 is a perspective view illustrating the individual members being exploded.

The outer container 5 includes a bottom wall 7 and a peripheral wall 8. The bottom wall 7 and the peripheral wall 8 define an inner cavity 10 configured to house the electrode group 2. In the outer container 5, the inner cavity 10 opens to a side opposite to a side on which the bottom wall 7 is located in the height direction. The lid 6 is attached to the peripheral wall 8 at an end opposite to the bottom wall 7. Accordingly, the lid 6 closes the opening of the inner cavity 10 of the outer container 5. The lid 6 and the bottom wall 7 are opposed to each other, with the inner cavity 10 being interposed in the height direction.

The electrode group 2 includes a pair of electrodes 13, a pair of current collectors 14, and a pair of current collecting tabs 15. One of the paired electrodes 13 is a positive electrode 13A, and the other of the paired electrodes 13, which is different from the positive electrode 13A, is a negative electrode 13B. One of the paired current collectors 14 is a positive electrode current collector 14A, and the other of the paired current collectors 14, which is different from the positive electrode current collector 14A, is a negative electrode current collector 14B. One of the paired current collecting tabs 15 is a positive electrode current collecting tab 15A, and the other of the paired current collecting tabs 15, which is different from the positive electrode current collecting tab 15A, is a negative electrode current collecting tab 15B. In each of the paired current collecting tab 15, a plurality of belt-shaped portions is bundled. In the electrode group 2, a separator (not illustrated) is interposed between the positive electrode 13A and the negative electrode 13B. The separator is formed of a material having an electrical insulation property, and electrically insulates the positive electrode 13A from the negative electrode 13B.

The positive electrode current collector 14A is formed of a positive electrode current collecting foil or the like. A positive electrode active material-containing layer (not illustrated) is formed on a surface of the positive electrode current collector 14A. The positive electrode current collector 14A is, for example, an aluminum foil or an aluminum alloy foil. The positive electrode current collector 14A has a thickness of about 10 um to 20 um. The positive electrode active material-containing layer includes a positive electrode active material. The positive electrode active material-containing layer may optionally contain a binder and an electro-conductive agent. Examples of the positive electrode active material include oxides, sulfides, and polymers capable of occluding and releasing lithium ions. The positive electrode current collecting tab 15A is a portion (unsupported portion) of the positive electrode current collector 14A, on which the positive electrode active material-containing layer is not supported. The positive electrode current collecting tab 15A protrudes relative to the negative electrode 13B and the separator.

The negative electrode current collector 14B is formed of a negative electrode current collecting foil or the like. A negative electrode active material-containing layer (not illustrated) is formed on a surface of the negative electrode current collector 14B. The negative electrode current collector 14B is, for example, an aluminum foil, an aluminum alloy foil, or a copper foil. The negative electrode current collector 14B has a thickness of about 10 µm to 20 µm. The negative electrode active material-containing layer includes a negative electrode active material. The negative electrode active material-containing layer may optionally contain a binder and an electro-conductive agent. Examples of the negative electrode active material include metal oxides, metal sulfides, metal nitrides, and carbon materials capable of occluding and releasing lithium ions. The negative electrode current collecting tab 15B is a portion (unsupported portion) of the negative electrode current collector 14B, on which the negative electrode active material-containing layer is not supported. The negative electrode current collecting tab 15B protrudes, relative to the positive electrode 13A and the separator, to a side opposite to a side toward which the positive electrode current collecting tab 15A protrudes.

In one example of the electrode group 2, the positive electrode 13A, the negative electrode 13B, and the separator are wound around a winding axis W. The positive electrode 13A is provided by being displaced to one side in an axial direction along the winding axis W, relative to the separator. The negative electrode 13B is provided by being displaced to an opposite side to the positive electrode 13A in the axial direction, relative to the separator. Thus, the paired current collecting tabs 15 (positive electrode current collecting tab 15A and negative electrode current collecting tab 15B) protrude outward in the axial direction, relative to the separator. In this case, the positive electrode current collecting tab 15A protrudes to one side in the axial direction, relative to the separator. The negative electrode current collecting tab 15B protrudes, relative to the separator, to an opposite side to the side toward which the positive electrode current collecting tab 15A protrudes.

In another example of the electrode group 2, a plurality of positive electrodes 13A and a plurality of negative electrodes 13B are alternatively stacked. In other words, the electrode group 2 has a stack structure. The positive electrodes 13A are provided by being displaced to one side, relative to the separator. The negative electrodes 13B are provided by being displaced to an opposite side to the positive electrodes 13A, relative to the separator. Thus, the paired current collecting tabs 15 protrude outward, relative to the separator. Specifically, the positive electrode current collecting tab 15A protrudes in a lateral direction of the battery 1, relative to the separator, and the negative electrode current collecting tab 15B protrudes, relative to the separator, to an opposite side to the positive electrode current collecting tab 15A in the lateral direction of the battery 1.

In the description below, it is assumed that the electrode group 2 is an electrode group of the above-described winding type, but the electrode group 2 is not limited to this. As illustrated in FIG. 1, one of the paired current collecting tabs 15 protrudes to one side in the lateral direction of the battery 1 (the axial direction along the winding axis W). The other of the paired current collecting tabs 15 protrudes to the opposite side to the side toward which the one of the paired current collecting tabs 15 protrudes in the lateral direction of the battery 1. In other words, the positive electrode current collecting tab 15A protrudes to one side in the lateral direction of the battery 1, and the negative electrode current collecting tab 15B protrudes to the other side in the lateral direction of the battery 1.

In the inner cavity 10, an electrolytic solution (not illustrated) is held (impregnated) in the electrode group 2. The electrolytic solution may be a nonaqueous electrolytic solution having an electrolyte dissolved in an organic solvent or may be an aqueous electrolytic solution such as an aqueous solution. A gel electrolyte or a solid electrolyte may be used in place of the electrolytic solution. In a case where a solid electrolyte is employed as the electrolyte, the solid electrolyte, instead of the separator, is interposed between the positive electrode 13A and the negative electrode 13B in the electrode group. In this case, the positive electrode 13A is electrically insulated from the negative electrode 13B by the solid electrolyte.

In the battery 1, a pair of electrode terminals 16 is attached to the outer surface of the lid 6. The paired electrode terminals 16 are exposed to the outside of the battery 1, and are disposed on the outer surface of the lid 6. Accordingly, the paired electrode terminals 16 are disposed in the container member 3. The paired electrode terminals 16 are made of a conductive material such as a metal. One of the paired electrode terminals 16 is a positive electrode terminal 16A of the battery 1. The other of the paired electrode terminals 16, which is different from the positive electrode terminal 16A, is a negative electrode terminal 16B of the battery 1. On the outer surface of the lid 6, an insulating member 18 is provided between each of the paired electrode terminals 16 and the lid 6. Each of the paired electrode terminals 16 is electrically insulated from the outer container 5 and the lid 6 by the insulating member 18.

A pair of conductive members 20 is disposed in the inner cavity 10 of the outer container 5. One of the paired conductive members 20 is a positive electrode conductive member 20A. The other of the paired conductive members 20, which is different from the positive electrode conductive member 20A, is a negative electrode conductive member 20B. The positive electrode conductive member 20A forms at least a part of an electrical path between the positive electrode current collecting tab 15A and the positive electrode terminal 16A. Thus, the positive electrode current collecting tab 15A is electrically connected to the positive electrode terminal 16A through at least the positive electrode conductive member 20A. The negative electrode conductive member 20B forms at least a part of an electrical path between the negative electrode current collecting tab 15B and the negative electrode terminal 16B. Thus, the negative electrode current collecting tab 15B is electrically connected to the negative electrode terminal 16B through at least the negative electrode conductive member 20B. Each of the conductive members 20 is made of a conductive material such as a metal. Examples of the conductive material, of which the conductive members 20 are formed, include aluminum, stainless steel, copper, and iron. For example, the pair of conductive members 20 is a pair of leads.

In each of the paired current collecting tabs 15, a plurality of belt-shaped portions are stacked. In manufacturing the battery 1, before each of the current collecting tabs 15 is electrically connected to the corresponding one of the electrode terminals 16, the belt-shaped portions are bundled in each of the paired current collecting tabs 15. Accordingly, in each of the current collecting tabs 15, the bundled belt-shaped portions are electrically connected to the corresponding one of the electrode terminals 16 via the corresponding one of the conductive members 20. Specifically, the bundled belt-shaped portions of the positive electrode current collecting tab 15A are electrically connected to the positive electrode terminal 16A via the positive electrode conductive member 20A. The bundled belt-shaped portions of the negative electrode current collecting tab 15B are electrically connected to the negative electrode terminal 16B via the negative electrode conductive member 20B. Note that in the example of FIG. 1, each of the paired conductive members 20 includes a pair of leg portions, and is formed in a two-forked shape. In addition, in each of the conductive members 20, at least one of the paired leg portions is connected to the bundled belt-shaped portions of the corresponding one of the current collecting tabs 15. In another example, each of the conductive members 20 may be configured to be provided with only one leg portion. In this case, in each of the conductive members 20, the leg portion, which is the only one leg portion, is connected to the bundled belt-shaped portions of the corresponding one of the current collecting tabs 15.

In the example in FIG. 1, the lid 6 is provided with a gas release valve 23 and a filling port (not illustrated). In addition, a sealing plate 25 that closes the filling port is welded on the outer surface of the lid 6. Note that the battery 1 is not necessarily provided with, for example, the gas release valve 23 and the filling port. In the inner cavity 10 of the outer container 5, the current collecting tabs (15A and 15B) and the paired conductive members 20 are electrically insulated from the outer container 5 by one or more insulating members (not illustrated).

Next, a joint part 31, which is formed in each of the paired current collecting tabs 15 of the electrode group 2, is described. Specifically, as illustrated in FIG. 1, a positive electrode-side joint part 31A is formed in the positive electrode current collecting tab 15A, and a negative electrode-side joint part 31B is formed in the negative electrode current collecting tab 15B. Here, the positive electrode-side joint part 31A and the negative electrode-side joint part 31B are similarly constituted. Thus, the same description of the structure of the positive electrode-side joint part 31A is applicable to the negative electrode-side joint part 31B. Hereinafter, the description is given on the assumption that the positive electrode current collecting tab 15A is the current collecting tab 15, and the positive electrode-side joint part 31A is the joint part 31, and the description of the negative electrode current collecting tab 15B and negative electrode-side joint part 31B is omitted. Note that the joint part 31 may not be formed in both of the paired current collecting tabs 15. In other words, the joint part 31 may be formed in only one of the paired current collecting tabs 15, or may be formed in each of both of the paired current collecting tabs 15.

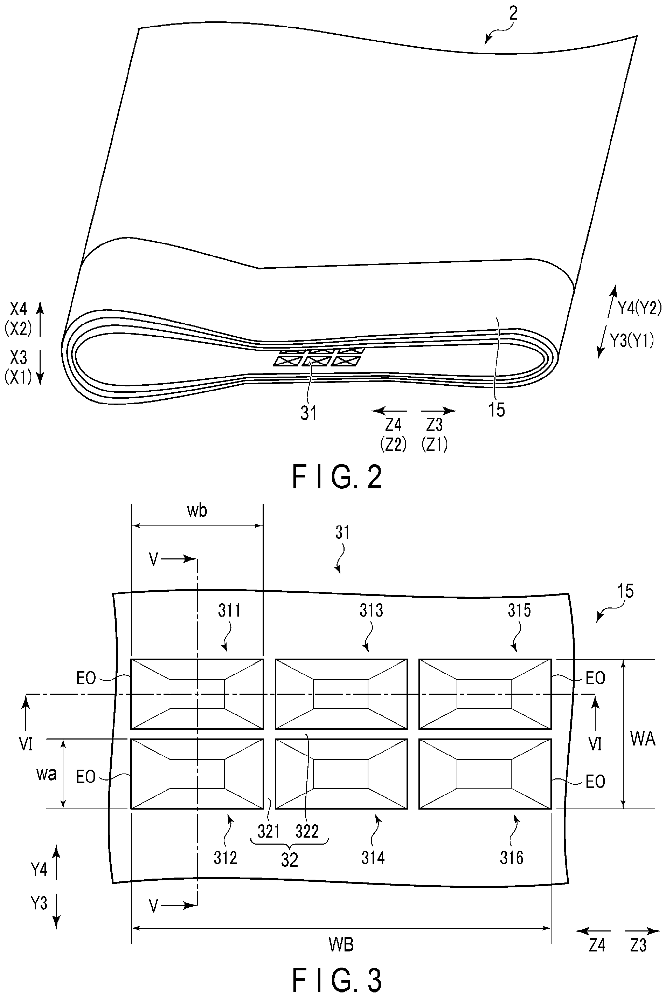

FIG. 2 is a schematic diagram illustrating a part of the electrode group 2 housed in the battery 1 according to the embodiment. In FIG. 2, like FIG. 1, the height direction, lateral direction and depth direction of the battery 1 are defined. In addition, in the joint part 31, a first direction (indicated by arrow Z3 and arrow Z4) agrees or substantially agrees with the height direction of the battery 1. A second direction (indicated by arrow Y3 and arrow Y4) crosses (perpendicular or substantially perpendicular to) the first direction. A third direction (indicated by arrow X3 and arrow X4) crosses (perpendicular or substantially perpendicular to) both the first direction and the second direction. In the present embodiment, the second direction agrees or substantially agrees with the lateral direction of the battery 1. The third direction agrees or substantially agrees with the depth direction of the battery 1. In addition, the third direction is the depth direction of the joint part 31.

The joint part 31 is formed, for example, in a connection part between the conductive member (not illustrated in FIG. 2) and the current collecting tab 15. Thereby, the current collecting tab 15 is joined to the conductive member, and the current collecting tab 15 and the conductive member are electrically connected. The joint part 31 is formed by, for example, a horn (ultrasonic horn) that is used for ultrasonic welding. As described above, the electrode group 2 of the present embodiment is the electrode group of the winding type. Thus, the ultrasonic horn is disposed at an appropriate position of the current collecting tab 15, from the outside in the lateral direction of the battery 1. The ultrasonic horn presses the current collecting tab 15 onto the conductive member, and deforms the current collecting tab 15. The ultrasonic horn recesses the current collecting tab 15 toward the conductive member side in the depth direction of the battery 1, and forms the joint part 31 by applying ultrasonic vibration. It is preferable that the joint part 31 is formed from the current collecting tab 15 to the conductive member along the depth direction of the battery 1 (the depth direction of the joint part 31). Thereby, since the joint part 31 is formed over both the current collecting tab 15 and the conductive member in the depth direction, the strength of joining of the current collecting tab 15 and the conductive member is increased, and thus the occurrence of a fault of the battery 1 due to defective joining of the current collecting tab 15 and the conductive member can be reduced.

FIG. 3 is a schematic diagram illustrating, in enlarged scale, the joint part 31 formed in the current collecting tab 15. In FIG. 3, like FIG. 2, the first direction, second direction and third direction of the joint part 31 are defined. As illustrated in FIG. 3, the joint part 31 of the present embodiment includes a plurality of recesses, and a spacing portion 32 formed between the recesses. The joint part 31 of the present embodiment includes six recesses 311 to 316. The six recesses 311 to 316 are formed close to each other. Specifically, in the joint part 31, a plurality of recesses arranged along the first direction of the joint part 31 are formed, and a plurality of recesses arranged along the second direction of the joint part 31 are formed. Thus, the joint part 31 includes a plurality of recesses arranged in at least one of the first direction and second direction of the joint part 31. Hereinafter, the recesses 311 to 316 are also referred to as a first recess to a sixth recess.

In the joint part 31 of the present embodiment, the first recess 311 and second recess 312, the third recess 313 and fourth recess 314, and the fifth recess 315 and sixth recess 316, are arranged along the second direction of the joint part 31 and are formed to neighbor each other, respectively. In addition, the first recess 311, third recess 313, and recess 315 are arranged along the first direction of the joint part 31, and the first recess 311 and third recess 313, and the third recess 313 and fifth recess 315, are formed to neighbor each other, respectively. Similarly, the second recess 312, fourth recess 314, and sixth recess 316 are arranged along the first direction of the joint part 31, and the second recess 312 and fourth recess 314, and the fourth recess 314 and sixth recess 316, are formed to neighbor each other, respectively. In this manner, in the joint part 31, three recesses are formed to be arranged in the first direction of the joint part 31, and two recesses are formed to be arranged in the second direction of the joint part 31, and thus six recesses are formed close to each other.

The spacing portion 32 includes a first spacing portion 321 and a second spacing portion 322. The first spacing portion 321 is formed between two recesses neighboring in the first direction of the joint part 31. Specifically, the first spacing portion 321 is formed between the first recess 311 and third recess 313, between the third recess 313 and fifth recess 315, between the second recess 312 and fourth recess 314, and between the fourth recess 314 and sixth recess 316. The second spacing portion 322 is formed between two recesses neighboring in the second direction of the joint part 31. Specifically, the second spacing portion 322 is formed between the first recess 311 and second recess 312, between the third recess 313 and fourth recess 314, and between the fifth recess 315 and sixth recess 316.

The first spacing portion 321 between the first recess 311 and third recess 313, and the first spacing portion 321 between the second recess 312 and fourth recess 314, are not displaced, or not substantially displaced, in the first direction of the joint part 31. Similarly, the first spacing portion 321 between the third recess 313 and fifth recess 315, and the first spacing portion 321 between the fourth recess 314 and sixth recess 316, are not displaced, or not substantially displaced, in the first direction of the joint part 31. In addition, the second spacing portion 322 between the first recess 311 and second recess 312, the second spacing portion 322 between the third recess 313 and fourth recess 314, and the second spacing portion 322 between the fifth recess 315 and sixth recess 316, are not displaced, or not substantially displaced, in the first direction of the joint part 31. Accordingly, in the joint part 31, linear or substantially linear spacing portions extending in the second direction of the joint part 31 are formed by the first spacing portions 321, and a linear or substantially linear spacing portion extending in the first direction of the joint part 31 is formed by the second spacing portions 322.

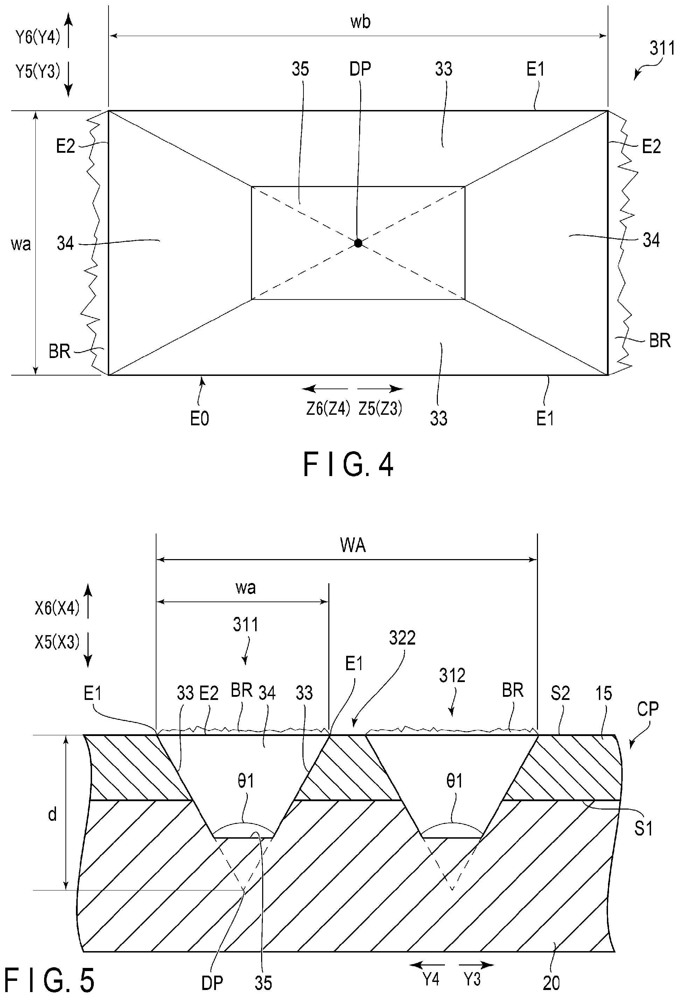

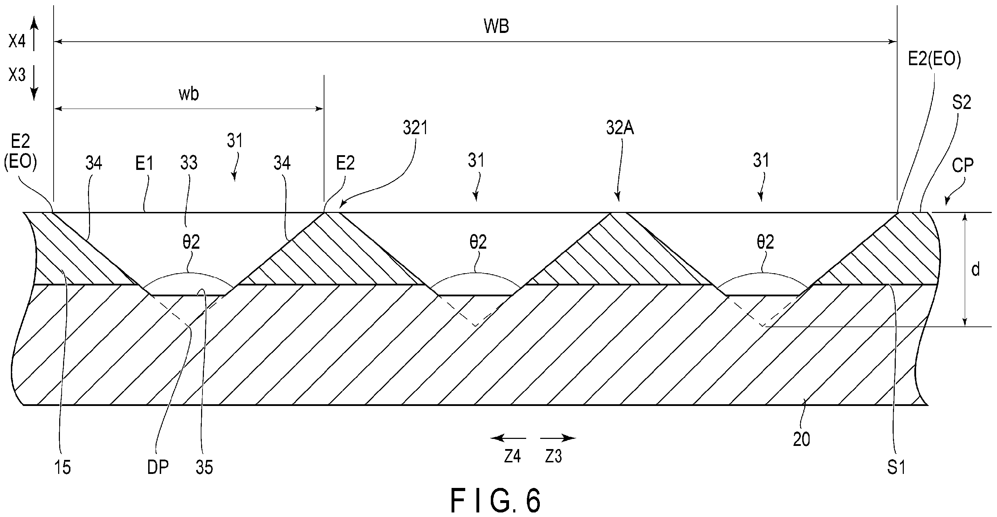

FIG. 4 is a schematic diagram illustrating one of the recesses 311 to 316 formed in the current collecting tab 15. FIG. 5 is a cross-sectional view along line V-V of the joint part 31 illustrated in FIG. 3. FIG. 6 is a cross-sectional view along line VI-VI of the joint part 31 illustrated in FIG. 3. Here, in the present embodiment, the recesses 311 to 316 are similarly formed. Thus, the same description of the structure of the recess 311 is applicable to the recesses 312 to 316. Note that in FIG. 4 to FIG. 6, like FIG. 2 and FIG. 3, the first direction, second direction and third direction are defined.

As illustrated in FIG. 4, the recess 311 includes two pairs of edge portions E1 and E2, two pairs of inclined surfaces 33 and 34, and a bottom portion 35. The two pairs of edge portions E1 and E2 include a pair of edge portions E1, and a pair of edge portions E2. The paired edge portions E1 are located, spaced apart from each other in the second direction of the joint part 31. One of the paired edge portions E1 forms one edge of the recess 311 in regard to the second direction of the joint part 31, and the other of the paired edge portions E1 forms the other edge of the recess 311 in regard to the second direction of the joint part 31. The paired edge portions E1 extend in the first direction of the joint part 31 between the paired edge portions E2. In addition, the paired edge portions E2 are located, spaced apart from each other in the first direction of the joint part 31. One of the paired edge portions E2 forms one edge of the recess 311 in regard to the first direction of the joint part 31, and the other of the paired edge portions E2 forms the other edge of the recess 311 in regard to the first direction of the joint part 31. The paired edge portions E2 extend in the second direction of the joint part 31 between the paired edge portions E1. Thus, a peripheral edge portion E of the recess 311 is formed by the two pairs of edge portions E1 and E2.

The two pairs of inclined surfaces 33 and 34 are disposed to neighbor each other. Each of the paired inclined surfaces 33 is formed from the edge portion E1, which forms an end of the inclined surface 33, to the bottom portion 35 in regard to the second direction of the joint part 31. Each of side edges of the paired inclined surfaces 33 extends toward the bottom portion 35 side relative to the end portion E1 in the second direction, as it extends toward the center side of the joint portion 31 in regard to the first direction. The paired inclined surfaces 33 are formed in such a state as to extend toward one side in the third direction of the joint part 31, i.e., toward the side on which the conductive member 20 is located in the third direction of the joint part 31 (the depth direction of the battery 1), as the paired inclined surfaces 33 extend toward the bottom portion 35.

Each of the paired inclined surfaces 34 is formed from the edge portion E2, which forms an end of the inclined surface 34, to the bottom portion 35 in regard to the first direction of the joint part 31. Each of side edges of the paired inclined surfaces 34 extends toward the bottom portion 35 side relative to the end portion E2 in the second direction, as it extends toward the center side of the joint portion 31 in regard to the second direction. The paired inclined surfaces 34 are formed in such a state as to extend toward one side in the third direction of the joint part 31, i.e., toward the side on which the conductive member 20 is located in the third direction of the joint part 31 (the depth direction of the battery 1), as the paired inclined surfaces 34 extend toward the bottom portion 35.

Since the two pairs of inclined surfaces 33 and 34 are formed in this manner, the two pairs of inclined surfaces 33 and 34 surround the bottom portion 35 from the outer peripheral side. As illustrated in FIG. 4 to FIG. 6, extension planes of the two pairs of inclined surfaces 33 and 34 intersect at an intersection DP. In the present embodiment, the paired inclined surfaces 33 have identical or substantially identical shapes, and the paired inclined surfaces 34 have identical or substantially identical shapes. Specifically, each of the paired inclined surfaces 33 and the paired inclined surfaces 34 has a triangular shape or a substantially triangular shape. Note that a plurality of intersections DP may be formed in the recess 311. In other words, the extension planes of the paired inclined surfaces 33 and the extension planes of the paired inclined surfaces 34 may intersect at a plurality of points.

As illustrated in FIG. 3 and FIG. 4, in the recess 311, a dimension between both ends of the recess 311 in the second direction of the joint part 31 is defined as wa, and a dimension between both ends of the recess 311 in the first direction of the joint part 31 is defined as wb. At this time, the dimension wa is less than the dimension wb. That is, wa < wb. Thus, the recess 311 is formed in a rectangular or a substantially rectangular shape that is elongated in the first direction of the joint part 31, as viewed from one side in the third direction of the joint portion 31. At this time, the dimension wa is equal to or substantially equal to the length of each of the paired edge portions E2, and the dimension wb is equal to or substantially equal to the length of each of the paired edge portions E1. Besides, it is preferable that the dimension wa is 0.2 times to 0.8 times relative to the dimension wb.

Note that the shape of the recess 311 is not limited to the shape illustrated in FIG. 3 and FIG. 4. It suffices that the shape of the recess 311 satisfies the condition that the dimension wa is less than the dimension wb. For example, when viewed from one side in the third direction of the joint part 31, the shape of the recess 311 may be an elliptic shape, a triangular shape, or a trapezoidal shape. In these cases, the shape of the recess 311 may be a truncated conical shape, a truncated trigonal pyramidal shape, or a truncated quadrangular pyramidal shape.

In addition, in each of the recesses 311 to 316, if the dimension in the second direction is wa and the dimension in the first direction is wb, the dimension wa is less than the dimension wb. In the present embodiment, since the recesses 311 to 316 are formed in identical or substantially identical shapes, the dimension wa is identical or substantially identical in the recesses 311 to 316, and the dimension wb is identical or substantially identical in the recesses 311 to 316.

As described above, as regards the recesses 311 to 316, a plurality of recesses are arranged in the second direction of the joint part 31, and a plurality of recesses are arranged in the first direction of the joint part 31. Here, as illustrated in FIG. 3 and the like, as regards the joint part 31, a dimension between both ends of the joint part 31 in the second direction of the joint part 31 is defined as WA, and a dimension between both ends of the joint part 31 in the first direction of the joint part 31 is defined as WB. At this time, the dimension WA is less than the dimension WB. That is, WA < WB. In one example, the dimension WA is 0.5 mm to 5.0 mm. Specifically, in the joint part 31, the recesses 311 to 316 are arranged two by two in the second direction of the joint part 31. Thus, the dimension WA in the second direction of the joint part 31 is greater than double the dimension wa in the second direction of each of the recesses 311 to 316. That is, WA > 2 × wa. In addition, in the joint part 31, the recesses 311 to 316 are arranged three by three in the first direction of the joint part 31. Thus, the dimension WB in the first direction of the joint part 31 is greater than three times the dimension wb in the first direction of each of the recesses 311 to 316. That is, WB > 3 × wb.

From the relationship between these dimensions, the dimension of the first spacing portion 321 in the first direction is half the difference between the dimension WB and three times the dimension wb, i.e., (WB - 3 × wb)/2. In addition, the dimension of the second spacing portion 322 in the second direction is the difference between the dimension WA and double the dimension wa, i.e., WA - 2 × wa. Note that the dimension of the first spacing portion 321 in the first direction may not be equal between the plural first spacing portions 321. However, in the first spacing portions 321 arranged in the first direction of the joint part 31, the total of the dimensions in the first direction of the joint part 31 is WB - 3 × wb. For example, the total of the dimensions in the.first direction of both the first spacing portion 321 between the recess 311 and recess 313, and the first spacing portion 321 between the recess 313 and recess 315, is WB - 3 × wb. In addition, the total of the dimensions in the first direction of both the first spacing portion 321 between the recess 312 and recess 314, and the first spacing portion 321 between the recess 314 and recess 316, is WB - 3 × wb.

The relationship between these dimensions is established regardless of the number of recesses. For example, in the joint part 31, it is assumed that m (m > 1) recesses are formed in the second direction of the joint part 31 and n (n > 1) recesses are formed in the first direction of the joint part 31. At this time, the joint part 31 includes m × n recesses. In this case, too, the joint part 31 satisfies WA < WB. In addition, the dimension WA of the joint part 31 is greater than m times the dimension wa of the recess, and the dimension WB of the joint part 31 is greater than n times the dimension wb of the recess. That is, WA > m × wa, and WB > n × wb. In addition, the dimension of the first spacing portion 321 in the first direction is 1/(n - 1) of the difference between the dimension WB of the joint part 31 and n times the dimension wb of the recess, i.e., (WB - n × wb)/(n - 1). Besides, the dimension of the second spacing portion 322 in the second direction is 1/(m - 1) of the difference between the dimension WA of the joint part 31 and m times the dimension wa of the recess, i.e., (WA - m × wa)/(m - 1).

However, in the plural first spacing portions 321 arranged in the first direction of the joint part 31, if the total of the dimensions in the first direction of the joint part 31 is WB - n × wb, the dimension of each of the first spacing portions 321 is not particularly limited. In addition, in the plural second spacing portions 322 arranged in the second direction of the joint part 31, if the total of the dimensions in the second direction of the joint part 31 is WA - m × wa, the dimension of each of the second spacing portions 322 is not particularly limited.

Note that the above applies to the case where the dimensions of the recesses are different from each other. In this case, too, in each recess, the dimension between both ends in the second direction is less that the dimension between both ends in the first direction. In addition, if the dimensions between both ends in the second direction of the respective recesses are wa1, wa2,..., wan, and the dimensions between both ends in the first direction of the respective recesses are wb1, wb2,..., wbm, WA > wa1 + wa2 + ... + wan, and WB > wb1 + wb2 + ... + wbm.

A case is assumed in which m = 1 and n > 1, that is, one recess is formed in the second direction of the joint part 31, and n (n > 1) recesses are formed in the first direction of the joint part 31. At this time, the joint part 31 includes n recesses. At this time, too, the joint part 31 satisfies WA < WB. However, since one recess is formed in the second direction of the joint part 31, the second spacing portion 322 is not formed. Thus, in the joint part 31, WA = wa. In addition, a case is assumed in which m > 1 and n = 1, that is, one recess is formed in the first direction of the joint part 31, and m (m > 1) recesses are formed in the second direction of the joint part 31. At this time, the joint part 31 includes m recesses. At this time, too, the joint part 31 satisfies WA < WB. However, since one recess is formed in the first direction of the joint part 31, the first spacing portion 321 is not formed. Thus, in the joint part 31, WB = wb. Besides, also in a case where m = 1 and n = 1, that is, one recess is formed in the joint part 31, the joint part 31 satisfies WA < WB. However, since one recess is formed in the joint part 31, neither the first spacing portion 321 nor the second spacing portion 322 is formed. Thus, in the joint part 31, WA = wb and WB = wb.

As illustrated in FIG. 5 and FIG. 6, the current collecting tab 15 includes surfaces S1 and S2. The surface S1 faces a side on which the conductive member 20 is located in the third direction of the joint part 31. The surface S2 faces an opposite side (an opposite side to the conductive member 20 side) to the surface S1 in the third direction of the joint part 31. In addition, the surface S1 of the current collecting tab 15 is in contact with the conductive member 20. As illustrated in FIG. 5, in the recess 311, the paired inclined surfaces 33 are inclined to the surface S1 and inclined to the surface S2. The paired inclined surfaces 33 are formed beyond the surface S1 of the current collecting tab 15 in the third direction of the joint portion 31. In addition, the paired surfaces 33 are formed from the current collecting tab 15 into the conductive member 20. In other words, the paired surfaces 33 are formed from the surface S2 of the current collecting tab 15 into the inside of the conductive member 20. In addition, as illustrated in FIG. 6, in the recess 311, the paired inclined surfaces 34 are inclined to the surface S1 and inclined to the surface S2. The paired inclined surfaces 34 are formed beyond the surface S1 of the current collecting tab 15 in the third direction of the joint portion 31. In addition, the paired inclined surfaces 34 are formed from the current collecting tab 15 into the conductive member 20. In other words, the paired inclined surfaces 34 are formed from the surface S2 of the current collecting tab 15 into the inside of the conductive member 20. Since the two pairs of inclined surfaces 33 and 34 are formed in this manner, the intersection DP is located in the inside of the conductive member 20 in the third direction of the joint part 31. In other words, the intersection DP is formed further toward the side on which the conductive member 20 is located, relative to the surface S1 in the third direction of the joint part 31.

A recess distance d of the recess 311 in the third direction is an imaginary distance from the surface S2 of the current collecting tab 15 to the intersection DP. As illustrated in FIG. 5 and FIG. 6, in the present embodiment, since the intersection DP is formed in the conductive member 20, the recess distance d of the recess 311 is greater than the thickness of the current collecting tab 15 (i.e., the dimension in the third direction of the joint part 31 from the surface S1 to the surface S2). Besides, the intersection DP is not located beyond the conductive member 20 in the third direction. Thus, the recess distance d of the recess 311 is less than the total thickness of the thickness of the current collecting tab 15 and the thickness of the conductive member 20.

The recess distance d of the recess 311 is greater than half the dimension wa of the recess 311. In regard to the recess distance d, it is preferable that d > wa/2. In addition, as described above, since the paired inclined surfaces 33 are formed in the identical or substantially identical shapes, the intersection DP is located at the center position of the recess 311 in the second direction of the joint part 31. Thus, the recess 311 is formed symmetric with respect to a plane that passes through the intersection DP and is perpendicular or substantially perpendicular to the second direction. It is thus preferable that, as illustrated in FIG. 5, an angle θ1 between the paired inclined surfaces 33 is an acute angle. It is preferable that the angle θ1 between the paired inclined surfaces 33 is less than 45°. In addition, it is preferable that the angle Θ1 between the paired inclined surfaces 33 is greater than 30°. Specifically, it is more preferable that the angle Θ1 between the paired inclined surfaces 33 is greater than 30° and is less than 45°. With the angle Θ1 between the paired inclined surfaces 33 being formed in this manner, when the current collecting tab 15 is joined to the conductive member 20, the occurrence of defective joining, such as breakage of the current collecting tab 15, can be reduced. With the angle 01 being formed as the acute angle in this manner, the recess distance d can be increased while the dimension wa is kept small in the recess. Thus, since the joint part 31 can be formed while the volume of the part surrounded by the recess is kept small, the amount of occurrence of burrs can be reduced.

As illustrated in FIG. 6, also in the VI-VI cross section, the recess distance d in the recess 311 is the distance from the surface S2 of the current collecting tab 15 to the intersection DP. Since the paired inclined surfaces 34 are formed to have the identical or substantially identical shapes, as described above, the intersection DP is located at the center position of the recess 311 in the first direction of the joint part 31. Thus, the recess 311 is formed symmetric with respect to a plane that passes through the intersection DP and is perpendicular or substantially perpendicular to the first direction. At this time, an angle Θ2 between the paired inclined surfaces 34 is not particularly limited. However, the angle θ2 between the paired inclined surfaces 34 is determined on the condition that wb is greater than wa and the angle θ1 between the paired inclined surfaces 33 is an acute angle. Accordingly, it is preferable that the angle θ2 between the paired inclined surfaces 34 is greater than the angle θ1 between the paired inclined surfaces 33. It is more preferable that the angle Θ2 between the paired inclined surfaces 34 is an obtuse angle.

Note that in a case where the dimensions of a plurality of recesses are mutually different, the recess distance d is defined for each of the recesses. Specifically, in each of the recesses, it is preferable that the recess distance d is greater than half the dimension between both ends of the recess in the second direction.

As illustrated in FIG. 4 and FIG. 5, burrs BR are formed on the peripheral edge portion E of the recess 311. The burrs BR are formed when the current collecting tab 15 is recessed by the ultrasonic horn. In the present embodiment, the ultrasonic horn is pressed on the current collecting tab 15, while vibrating in the first direction of the joint part 31, thereby forming the recess 311. At this time, the current collecting tab 15 is pushed by the ultrasonic horn toward the side on which the conductive member 20 is located, and vibration along the first direction of the joint part 31 is applied to the current collecting tab 15. Thus, the ultrasonic horn that vibrates in the extending direction of the paired edge portions E1 forms the paired edge portions E1 in the current collecting tab 15. The ultrasonic horn that vibrates in a direction crossing (perpendicular or substantially perpendicular to) the paired edge portions E2 formed in the current collecting tab 15 forms the paired edge portions E2 in the current collecting tab 15. Thus, the residual amount of burrs BR is different between the paired edge portions E1 and the paired edge portions E2. In the present embodiment, the residual amount of burrs is greater in the part neighboring the recess 311 from the first direction, than in the part neighboring the recess 311 from the second direction. The part neighboring the recess 311 from the first direction is, for example, the part neighboring the paired edge portions E2 from the first direction. The part neighboring the recess 311 from the second direction is, for example, the part neighboring the paired edge portions E1 from the second direction.

Note that FIG. 4 and FIG. 5 do not illustrate burrs BR formed on the paired edge portions E1. In addition, the burrs BR may not be formed over the entire dimensions of the paired edge portions E2. In other words, the burrs BR may be formed only on parts of the paired edge portions E2. In the recesses 312 to 316, like the recess 311, the burrs BR are formed on the peripheral edge portion E, and the residual amount of the formed burrs BR is greater on the paired edge portions E2 than on the paired edge portions E1. Accordingly, in the joint part 31 of the present embodiment, the dimension of the edge portion, where the residual amount of burrs BR is large, is less than the dimension of the edge portion, where the residual amount of burrs BR is small.

In this manner, the burrs BR are formed on the peripheral edge portions E of the recesses 311 to 316. As described above, the recesses 311 to 316 are formed by the ultrasonic horn that vibrates in the vibrating direction along the first direction of the joint part 31. At this time, as illustrated in FIG. 3 and FIG. 6, in the joint part 31, the residual amount of burrs BR formed on edge portions E2 (referred to as "outermost edge portions EO") located outermost in the first direction of the joint part 31 is greater than the residual amount of burrs BR formed on the other edge portions E1 and E2. The cause of the occurrence of the difference in the residual amount of burrs is assumed to be that the burrs formed on the edge portions other than the outermost edge portions EO are removed by the pressing on the current collecting tab 15 and vibration. In the joint portion 31 of the present embodiment, to be more specific, of the paired edge portions E2 of the recess 311, the edge portion E2 located outside in the first direction of the joint part 31 is the outermost edge portion EO. Similarly, of the paired edge portions E2 of the recess 312, the edge portion E2 located outside in the first direction of the joint part 31 is the outermost edge portion EO. Of the paired edge portions E2 of the recess 315, the edge portion E2 located outside in the first direction of the joint part 31 is the outermost edge portion EO. Of the paired edge portions E2 of the recess 316, the edge portion E2 located outside in the first direction of the joint part 31 is the outermost edge portion EO.

As described above, in the present embodiment, the joint part 31 connects the current collecting tab 15 and the conductive member 20. The joint part 31 includes the recess and the peripheral edge portion E. The recess is recessed in the current collecting tab 15 toward the side on which the conductive member 20 is located, and a second dimension wa between both ends in the second direction is less than a first dimension wb between both ends in the first direction. The peripheral edge portion E surrounds the recess, and the residual amount of burrs is greater in the part neighboring the recess from the first direction than the part neighboring the recess from the second direction. By the formation of the joint part 31 in this manner, when the joint part 31 is formed by the ultrasonic horn that vibrates in a direction along the first direction, the dimension of the part, where the residual amount of burrs BR is greater than in the other part, can be formed to be smaller. Thus, the total amount of burrs, which occur when the joint part 31 is formed, can be reduced.

In the present embodiment, it is preferable that the joint part 31 is formed to extend from the current collecting tab 15 to the conductive member 20. By the formation of the joint part 31 in this manner, the joint part 31 is formed on both sides, with the surface S1 being interposed. Thereby, the current collecting tab 15 and the conductive member 20 can fully be joined.

In the present embodiment, it is preferable that the joint part 31 includes a plurality of recesses, and includes a peripheral edge portion for each of the recesses. In the joint part 31 formed of the set of the recesses, it is preferable that a fourth dimension WA between both ends in the second direction is less than a third dimension WB between both ends in the first direction. By the formation of the recesses in this manner, the joint part 31 is formed in an elongated shape in the first direction. Thus, when the joint part 31 is formed by the ultrasonic horn that vibrates in a direction along the first direction, for example, the dimension of the edge portion, on which the residual amount of burrs BR is greater than on the other edge portions, can be formed to be smaller. Thus, the total amount of burrs occurring at the time of forming the joint part 31 can be reduced.

In the present embodiment, it is preferable that, among the peripheral edges of the recesses, the residual amount of burrs is greater in the outermost part of the joint part 31 in the first direction than in the other parts. Thereby, for the above-described reasons, the residual amount of burrs in the other parts can be reduced, and the residual amount of burrs occurring from the entirety of the joint part 31 can be reduced. Therefore, an increase amount of burrs occurring at the time of forming the joint part 31 can be reduced.

In the present embodiment, it is preferable that the second dimension wa is 0.2 times to 0.8 times of the first dimension wb. By forming the recess 311 with these dimensions, the dimension of the recess 311 in the direction crossing (perpendicular or substantially perpendicular to) the vibrating direction can be reduced in the joining by the ultrasonic horn that vibrates in the first direction of the joint part 31. In particular, in a case where the second dimension wa is equal to or greater than 0.2 times the first dimension wb, the second dimension wa is not too small, and thus the possibility of breakage of the current collecting tab 15 that is the joining target decreases. In addition, in a case where the second dimension wa is equal to or less than 0.8 times the first dimension wb, since a difference in dimensions between the first direction and the second direction can sufficiently be secured, the advantageous effects in the present embodiment can fully be obtained.

In the present embodiment, it is preferable that the recess distance d of the recess is greater than half the second dimension wa. Thereby, when the recess is formed by the ultrasonic horn that vibrates along the first direction, the size of the recess can be formed to be small, while the recess distance d of the recess is formed to be sufficiently large for joining. In addition, since the size of the recess can be reduced, the size of the joint part 31 can be reduced. Therefore, the total amount of burrs occurring at the time of forming the joint part 31 can be reduced.

### (Example)

As an example, a joint part 31 including the recesses of the embodiment was formed by joining the current collecting tab 15 and the conductive member 20 by ultrasonic welding by the ultrasonic horn. As a comparative example, by forming a joint part 31 including recesses each of in which edge portions E1 and E2 have identical dimensions, the current collecting tab 15 and the conductive member 20 are joined by ultrasonic welding by the ultrasonic horn. As regards both the recesses of the example and the recesses of the comparative example, the number of recesses is one row in the second direction of the joint part 31, and three rows in the first direction of the joint part 31. Accordingly, in each of the example and the comparative example, three recesses in total are formed at a time. In each of the example and the comparative example, the vibrating direction of the ultrasonic horn is made to substantially agree with the first direction of the joint part 31. In addition, in each of the example and the comparative example, a test was conducted five times. The values of θ1, θ2, wa, and wb in each recess are set as indicated in the table below.

**(Table 1)**

| | ***θ*1 (°)** | ***θ*2 (°)** | **wa (mm)** | **wb (mm)** |
|---|---|---|---|---|
| **Example** | **60** | **90** | **3.1** | **4.7** |
| **Comparative example** | **90** | **90** | **4.7** | **4.7** |

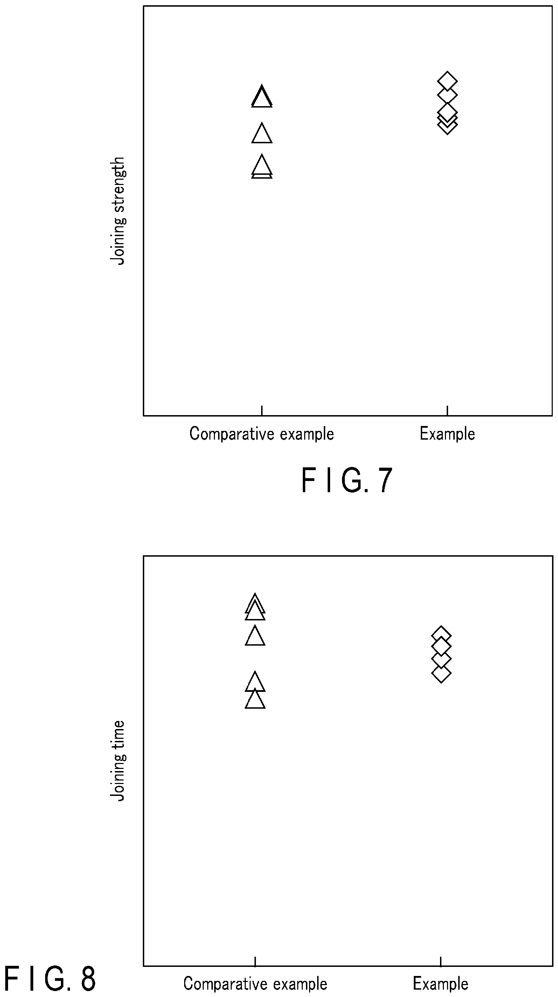

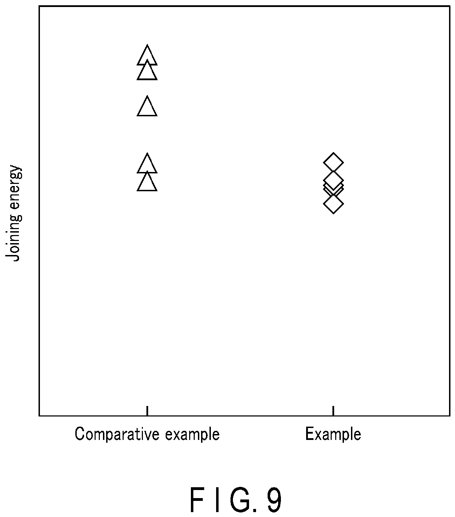

The results are illustrated in FIG. 7 to FIG. 9. The ordinate axis of FIG. 7 indicates joining strength, the ordinate axis of FIG. 8 indicates joining time, and the ordinate axis of FIG. 9 indicates joining energy. The units in the ordinate axes of FIG. 7 to FIG. 9 are discretionary units corresponding to the respective items. As illustrated in FIG. 7, the joining strength of the recesses of the example has less nonuniformity than the joining strength of the recesses of the comparative example. As illustrated in FIG. 8, the joining time of the recesses of the example has less nonuniformity than the joining time of the recesses of the comparative example. As illustrated in FIG. 9, the joining energy of the recesses of the example has less nonuniformity than the joining energy of the recesses of the comparative example. It is considered that these results are due to the fact that the stability of joining at a time of performing one-time joining is improved (the reproducibility of joining is improved) by the reduction in the occurrence of burrs in the recesses of the example. Thus, by reducing the occurrence of burrs, the improvement of the joining property of members by recesses is exhibited.

### (Modifications)

In one modification, in at least one of the recesses 311 to 316, the bottom portion 35 may be formed at the same position as the intersection DP in the third direction. In this case, the bottom portion 35 agrees or substantially agrees with the intersection DP. In the present modification, too, the two pairs of inclined surfaces 33 and 34 have the same structure as in the above-described embodiment. Thus, in the present modification, the intersection DP is located at the bottom portion 35, and the shape of the recess is, for example, a trigonal pyramidal shape, or a quadrangular pyramidal shape, or a conical shape. In addition, the recess distance d coincides with the depth of the recess. In the present modification, like any one of the above-described embodiment and the like, the peripheral edge portion E surrounds the recess, and the residual amount of burrs is greater in the part neighboring the recess from the first direction, than in the part neighboring the recess from the second direction. Thereby, also in the battery 1 of the present modification, the same advantageous effects as in the above-described embodiment and the like can be obtained.

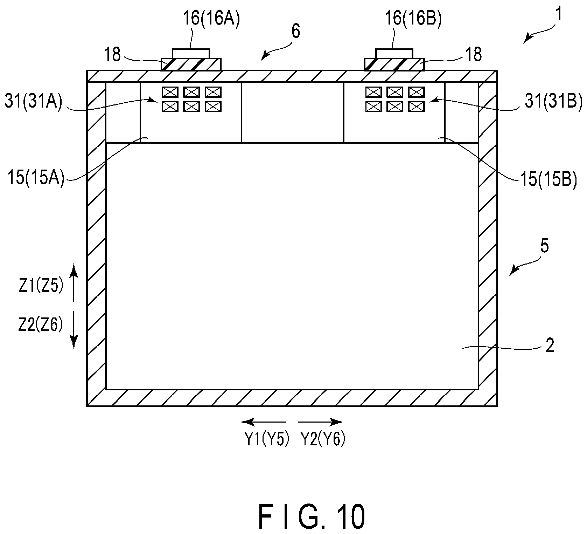

FIG. 10 is a cross-sectional view schematically illustrating a modification of the battery 1 according to the embodiment, by a cross section perpendicular to the depth direction of the battery 1. In the battery 1 illustrated in FIG. 10, too, the height direction, lateral direction and depth direction of the battery 1 are defined. However, in the battery 1 of the present modification, in the joint part 31, the first direction (indicated by arrow Y5 and Y6) agrees or substantially agrees with the lateral direction of the battery 1. The second direction (indicated by arrow Z5 and arrow Z6) agrees or substantially agrees with the height direction of the battery 1. The third direction agrees or substantially agrees with the depth direction of the battery 1.

In the battery 1 of the present modification, a pair of current collecting tabs 15 protrude to the same side. The paired current collecting tabs 15 protrude from the electrode group 2 to the side on which the paired electrode terminals 16 are located in the height direction of the battery 1. In the present modification, too, the paired current collecting tabs 15 are not in contact with each other. Specifically, the positive electrode current collecting tab 15A protrudes from the electrode group 2 to the side on which the positive electrode terminal 16A is located. The negative electrode current collecting tab 15B protrudes from the electrode group 2 to the side on which the negative electrode terminal 16B is located. In this case, too, as illustrated in FIG. 10, like any one of the above-described embodiment and the like, the peripheral edge portion E surrounds the recess, and the residual amount of burrs is greater in the part neighboring the recess from the first direction, than in the part neighboring the recess from the second direction. Thereby, also in the battery 1 of the present modification, the same advantageous effects as in the above-described embodiment and the like can be obtained.

Note that the container member of the battery 1 is not limited to the configuration in which the container member is composed of the outer container 5 and the lid 6. In one modification, as disclosed in reference document 1 (International Publication No. 2016/204147), the container unit may be composed of a first container member and a second container member, which are formed of a metal. In this case, the first container member includes a bottom wall and a peripheral wall, and, in the first container member, a flange in the peripheral wall protrudes to the outer peripheral side from an end portion opposite to the bottom wall. In addition, the second container member is attached to the flange of the first container member. In another modification, the container unit of the battery may be formed of a laminate film of a three-layer structure in which a metal layer is sandwiched between resin layers. In each of the modifications, like any one of the above-described embodiment and the like, the joint part 31 is formed in the current collecting tab 15.

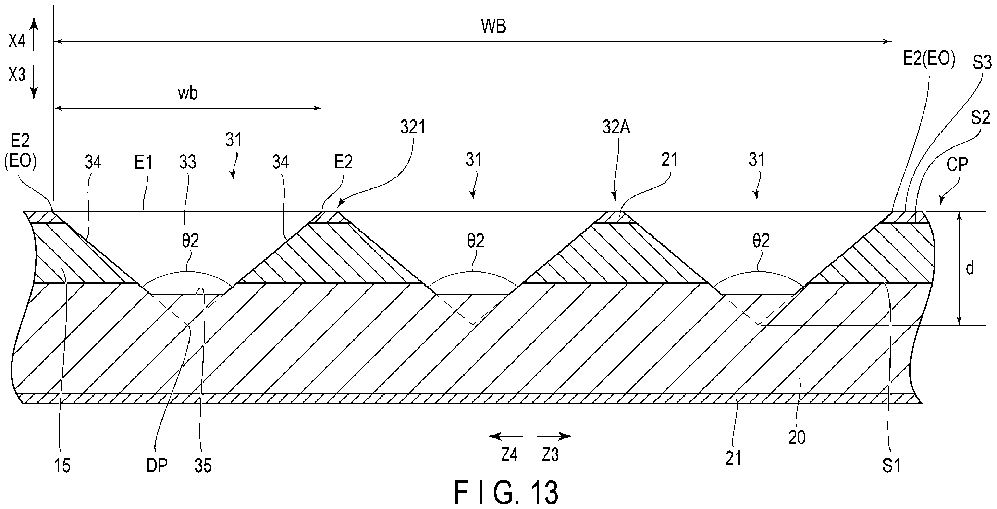

FIG. 11 is a perspective view schematically illustrating an example of a battery according to a modification of the embodiment. In FIG. 11, like FIG. 1, the height direction, lateral direction and depth direction of the battery 1 are defined, and the first direction, second direction and third direction of the joint part 31 are defined. FIG. 12 is a cross-sectional view illustrating the joint part 31 illustrated in FIG. 11, by a cross section perpendicular or substantially perpendicular to the first direction. FIG. 13 is a cross-sectional view illustrating the joint part 31 illustrated in FIG. 11, by a cross section perpendicular or substantially to the second direction. In FIG. 12 and FIG. 13, like FIG. 11, the height direction, lateral direction and depth direction of the battery 1 are defined, and the first direction, second direction and third direction of the joint part 31 are defined.

In the modification illustrated in FIG. 11 to FIG. 13, the conductive member 20 is composed of a plurality of members. In the modification of FIG. 11 to FIG. 13, a backup lead 21 functioning as a member of the conductive member 20 is attached to the current collecting tab 15. A positive electrode-side backup lead 21A is attached to the positive electrode current collecting tab 15A, and a negative electrode-side backup lead 21B is attached to the negative electrode current collecting tab 15B. The backup lead 21 includes a surface S3. The surface S3 faces an opposite side (a side opposite to the current collecting tab 15 side) to the surface S1 in the third direction of the joint part 31, and forms a front surface of the joint part 31. The paired inclined surfaces 33 are formed from the surface S3 of the backup lead 21 into the inside of the conductive member 20, and the paired inclined surfaces 34 are formed from the surface S3 of the backup lead 21 into the inside of the conductive member 20. In the present modification, the recess distance d is a distance from the surface S3 of the backup lead 21 to the intersection DP.

In the present modification, the intersection DP may be located further toward the conductive member 20 side relative to the surface S1 of the current collecting tab 15 in the third direction. The intersection DP may be located in the backup lead 21 on the side of contact with the conductive member 20 in the third direction. At this time, the two pairs of inclined surfaces 33 and 34 are formed from the backup lead 21 on the side of contact with the current collecting tab 15 to the vicinity of the backup lead 21 on the side of contact with the conductive member 20 in the third direction. In this case, too, as illustrated in FIG. 11 to FIG. 13, the peripheral edge portion E surrounds the recess, and the residual amount of burrs is greater in the part neighboring the recess from the first direction, than in the part neighboring the recess from the second direction. Thereby, also in the battery 1 of the present modification, the same advantageous effects as in the above-described embodiment and the like can be obtained.

At least one of these embodiments, the joint part that connects the current collecting tab of the battery and the conductive member includes the recess and the peripheral edge portion. The recess is recessed toward the side on which the conductive member is located in the current collecting tab, and the second dimension between both ends in the second direction is less than the first dimension between both ends in the first direction in the recess. The peripheral edge portion surrounds the recess, and the residual amount of burrs is greater in the part neighboring the recess from the first direction, than in the part neighboring the recess from the second direction. Thereby, there can be provided a battery and a manufacturing method of a battery, which can reduce the formation of burrs in a recess that joins a belt-shaped portion and a conductive member.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A battery comprising:
a container member;
an electrode terminal disposed in the container member;
an electrode group housed in an inner cavity of the container member, the electrode group including a current collecting tab that protrudes;
a conductive member configured to electrically connect the electrode terminal and the current collecting tab; and
a joint part configured to connect the current collecting tab and the conductive member, wherein
the joint part includes:
a recess recessed toward a side on which the conductive member is located in the current collecting tab, a second dimension between both ends in a second direction of the recess being less than a first dimension between both ends in a first direction of the recess, the second direction crossing the first direction; and
a peripheral edge portion surrounding the recess, the peripheral edge portion being configured such that a residual amount of burrs being greater in a part neighboring the recess from the first direction, than in a part neighboring the recess from the second direction.

2. The battery of Claim 1, wherein the joint part is formed to extend from the current collating tab to the conductive member.

3. The battery of Claim 1 or 2, wherein
the joint part includes a plurality of the recesses, and includes the peripheral edge portion relative to each of the recesses, and
in the joint part formed of a set of the recesses, a fourth dimension between both ends in the second direction is less than a third dimension between both ends in the first direction.

4. The battery of Claim 3, wherein among the peripheral edge portions of the recesses, the residual amount of the burrs is greater in an outermost part of the joint part in the first direction than in the other parts.

5. The battery of any one of Claims 1 to 4, wherein the second dimension is 0.2 times to 0.8 times of the first dimension.

6. The battery of any one of Claims 1 to 5, wherein a recess distance of the recess is greater than half the second dimension.

7. A manufacturing method of a battery, comprising:
disposing an electrode terminal in a container member;
forming an electrode group in a state in which a current collecting tab protrudes;
housing the electrode group in an inner cavity of the container member;
forming a recess recessed toward a side on which a conductive member is located in the current collecting tab, the recess being formed by a horn that vibrates along a first direction in such a state that a second dimension between both ends in a second direction crossing the first direction is greater than a first dimension between both ends in the first direction; and
connecting the current collecting tab to the conductive member by forming the recess recessed toward the conductive member side in the current collecting tab, and electrically connecting the electrode terminal and the current collecting tab by the conductive member.

8. The manufacturing method of a battery of Claim 7, wherein the forming the recess recessed toward the side on which the conductive member is located in the current collecting tab includes:
forming a plurality of the recesses;
forming a peripheral edge portion that surrounds the recess, for each of the recesses; and
forming the recesses in such a state that a residual amount of burrs is greater in a part formed on an outermost side in the first direction in the peripheral edge portions of the recesses than in the other parts in the peripheral edge portions.
